# EUROPÄISCHE PATENTSCHRIFT

(11) **EP 3 022 211 B1**
(45) Veröffentlichungstag und Bekanntmachung des Hinweises auf die Patenterteilung: **26.09.2018**
(21) Anmeldenummer: 14736842.7
(22) Anmeldetag: 09.07.2014
(51) Int. Cl.: C07F 7/08, C08G 18/67, C08G 18/71, C08G 18/73, C08G 18/75, C08G 18/77, C08G 18/79, C08G 18/81, C08G 18/28, C08G 18/78

(54) **SILYLIERTE POLYISOCYANATE**
SILYLATED POLYISOCYANATES
POLYISOCYANATES SILYLÉS

(30) Priorität: 19.07.2013 EP 13177260
(43) Veröffentlichungstag der Anmeldung: 25.05.2016
(73) Patentinhaber: BASF SE, 67056 Ludwigshafen am Rhein (DE); BASF Coatings GmbH, 48165 Münster (DE)
(72) Erfinder: HAAF-KLEINHUBBERT, Christina, 69502 Hemsbach (DE); FELDMANN, Verena, 77694 Kehl (DE); LUCAS, Frederic, 77654 Offenburg (DE); IN T VELD, Pieter, 67063 Ludwigshafen (DE); AHMED, Rumman, 48151 Münster (DE); HICKL, Markus, 68163 Mannheim (DE); BRUCHMANN, Bernd, 67251 Freinsheim (DE); HINTZE-BRÜNING, Horst, 48165 Münster (DE); SCHMELTER, Dirk, 48149 Münster (DE); GURIYANOVA, Svetlana, 67071 Ludwigshafen (DE)
(74) Vertreter: BASF IP Association
(86) Internationale Anmeldenummer: PCT/EP2014/064689
(87) Internationale Veröffentlichungsnummer: WO 2015/007588

(56) Entgegenhaltungen:
- US-A1- 2002 058 748

## Beschreibung

Die vorliegende Erfindung betrifft silylierte allophanatgruppenhaltige Polyisocyanate, Verfahren zu deren Herstellung, deren Verwendung und solche enthaltende Beschichtungsmassen.

Pigmentierte Lacke und Klarlacke aus oder auf Basis von Polyurethanen sind seit einigen Jahrzehnten bekannt.

In jüngerer Zeit werden Isocyanatgruppen-aufweisende Polyisocyanate teilweise mit Alkoxysilylgruppen substituiert, so daß das entstehende Produkt neben der Härtung der freien Isocyanatgruppen noch mit der Siloxanbildung über einen weiteren Härtungsmechanismus verfügt. Für eine derartige Ausgestaltung der Polyisocyanate wird häufig das kommerziell leicht verfügbare 3-(Trialkoxysilyl)-propylamin oder dessen N-alkylierte Derivate eingesetzt, siehe z.B. in WO2008/074489.

Nachteilig an dieser Reaktionsführung ist, daß bei dieser Umsetzung von Isocyanatgruppen mit 3-(Trialkoxysilyl)-propylamin Harnstoffgruppen entstehen, die die Löslichkeit der entstehenden Produkte herabsetzen.

Gewünscht wäre beispielsweise die Anbindung von Alkoxysilylgruppen über Urethangruppen. Dies erfordert jedoch den Einsatz einer Verbindung, die sowohl Alkoxysilylgruppen als auch eine freie Hydroxygruppe zur Anbindung an die Isocyanatgruppe aufweist. Dies schließt sich jedoch gegenseitig aus, da die freie Hydroxygruppe sofort mit der Alkoxysilylgruppe reagieren würde.

Ferner besteht Bedarf an niedrigviskosen Polyisocyanaten, die in Polyurethan-Beschichtungsmassen eingesetzt werden können. Um eine Beschichtungsmasse auf eine gewünschte Applikationsviskosität einzustellen ist häufig die Zugabe von Lösungsmittel erforderlich. Durch Verringerung der Viskosität der Ausgangskomponenten kann der Bedarf an Lösungsmittel verringert werden.

Aufgabe der vorliegenden Erfindung war es, ein Verfahren zu entwickeln, mit dem Alkoxysilylgruppen an Polyisocyanate angebunden werden können, ohne daß die Produkte die schlechte Löslichkeit harnstoffgruppenhaltiger Polyisocyanate zeigen. Zusätzlich sollen die Produkte möglichst eine niedrige Viskosität aufweisen.

Die Aufgabe wurde gelöst durch ein Verfahren zur Herstellung von silylgruppentragenden, allophanatgruppenhaltigen Polyisocyanaten, in dem man
- in einem ersten Schritt mindestens ein Di- oder Polyisocyanat (A) mit mindestens einem ungesättigten Alkohol (B), der mindestens eine C=C-Doppelbindung und mindestens eine Hydroxygruppe trägt, unter Reaktionsbedingungen umsetzt, unter denen Allophanatgruppen ausgebildet werden, wobei die Umsetzung in Anwesenheit mindestens eines Katalysators erfolgt, ein Katalysator eingesetzt wird, mit dem überwiegend allophanatgruppenhaltige Polyisocyanate ohne Isocyanuratgruppen erhalten werden und im Reaktionsgemisch der Anteil an Polyisocyanaten mit anderen funktionellen Gruppen als Allophanatgruppen weniger als 50 Gew.-% beträgt, und
- anschließend an zumindest einen Teil der so an das entstandene allophanatgruppenhaltige Polyisocyanat über Allophanatgruppen gebundenen C=C-Doppelbindungen durch eine Hydrosilylierung mindestens eine Silanverbindung (C), die mindestens eine Si-H-Bindung trägt, addiert.

Durch den speziellen zweischrittigen Aufbau der Verbindungen enthalten erfindungsgemäß erhaltenen silylierten Polyisocyanate nicht die oben erwähnten störenden Harnstoffgruppen. Die erhältlichen Polyisocyanate weisen eine leichtere Löslichkeit in gängigen Lösungsmitteln und/oder einen niedrigeren Schmelzpunkt auf als die analogen Harnstoffgruppen aufweisenden Polyisocyanate.

Durch die Anbindung der Silylgruppen an die erfindungsgemäßen Polyisocyanate über Allophanatgruppen kann zudem die Viskosität der Produkte herabgesetzt werden.

Bei dem Di- oder Polyisocyanat (A) handelt es sich um eine Verbindung, die mindestens 2 freie Isocyanatgruppen aufweist. Dabei kann es sich um monomere Di- oder Polyisocyanate handeln oder um Polyisocyanate, die durch Umsetzung mindestens eines Diisocyanats erhältlich sind. Bevorzugt handelt es sich um monomere Diisocyanate.

Bei den Diisocyanaten und den für die Herstellung der Polyisocyanate eingesetzten monomeren Isocyanate kann es sich um aromatische, aliphatische oder cycloaliphatische Diisocyanate handeln, bevorzugt aliphatische oder cycloaliphatische, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen. Von Natur zeigen die aromatischen Isocyanate eine höhere Reaktivität, die sich durch den Einsatz von Katalysatoren noch steigern lässt.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen.

Es kommen prinzipiell auch höhere Isocyanate mit im Mittel mehr als 2 Isocyanatgruppen in Betracht. Dafür eignen sich beispielsweise Triisocyanate wie Triisocyanatononan, 2'-Isocy-anatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen im wesentlichen keine Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocy-anatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocy-anatocyclohexyl)methan, 1-Isocyanato-3,3,5-trimethyl-5-(isocyanatomethyl)cyclohexan (Isophorondiisocyanat), 1,3-oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricy-clo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenyl-methan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 100 ppm auf, besonders bevorzugt weniger als 30 ppm, insbesondere weniger als 20 ppm und speziell weniger als 10 ppm. Dies kann beispielsweise gemessen werden durch die ASTM-Vorschrift D4663-98. Die Gehalte an gesamtem Chlor liegen beispielsweise bei unter 1000 ppm, bevorzugt unter 800 ppm und besonders bevorzugt unter 500 ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Gegenüber den monomeren Diisocyanaten weniger bevorzugt, wenn auch denkbar, sind Polyisocyanate (A), zu denen die monomeren Isocyanate oligomerisiert werden können. Diese sind in der Regel wie folgt charakterisiert:
Die mittlere NCO-Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew.-%.

Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cyclo-aliphatisch gebundenen Isocyanatgruppen, vorzugsweise aliphatisch und/oder cyclo-aliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen, bevorzugt Alkanolen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Bismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-13 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

In einer möglichen Ausführungsform der vorliegenden Erfindung ist das Polyisocyanat (A) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

In einer weiteren möglichen Ausführungsform handelt es sich bei dem Polyisocyanat (A) um Isocyanuratgruppen enthaltende Polyisocyanate von 1,6-Hexamethylendiisocyanat.

Beispielsweise kann es sich bei dem Polyisocyanat (A) um ein Gemisch handeln, enthaltend niedrigviskose Polyisocyanate, bevorzugt Isocyanuratgruppen enthaltende Polyisocyanate, mit einer Viskosität von 200-1500 mPa*s, bevorzugt 400-1300, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Die erfindungsgemäßen silylierten Polyisocyanate sind beispielsweise erhältlich, bevorzugt erhalten durch zweischrittige Umsetzung der entsprechenden Diisocyanate oder weniger bevorzugt der Polyisocyanate. Im ersten Schritt wird diese Verbindung mit einem ungesättigten Monoalkohol (B), bevorzugt Allylalkohol, unter Reaktionsbedingungen umgesetzt, unter denen zumindest teilweise, bevorzugt überwiegend, besonders bevorzugt im wesentlichen Allophanatgruppen ausgebildet werden. An die so angebundene Doppelbindung wird im nächsten Schritt durch übergangsmetall-, bevorzugt platinkatalysierte Hydrosilylierung eine Verbindung (C) der Formel (V) addiert

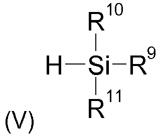

Darin bedeuten R⁹-R¹¹ unabhängig voneinander
- einen Alkylrest oder
- einen Rest -O-R¹²,
worin
R¹² ein Alkyl- oder Arylrest bedeuten kann.

Unter Alkyl werden im Rahmen der vorliegenden Schrift geradkettige oder verzweigte Alkylgruppen mit einem bis 20 Kohlenstoffatomen verstanden, bevorzugt C₁ - C₈-Alkylgruppen, also beispielsweise Methyl-, Ethyl-, n-Propyl-, iso-Propyl-, n-Bu-tyl-, iso-Butyl, 2-Butyl-, tert.-Butyl-, 1-Pentyl, 2-Pentyl, iso-Amyl, n-Hexyl, n-Octyl oder 2-Ethylhexyl.

Unter C₁-C₄-Alkyl wird in dieser Schrift Methyl-, Ethyl-, n-Propyl-, iso-Propyl-, n-Butyl-, iso-Butyl-, 2-Butyl-, oder tert.-Butyl- verstanden.

R⁹ bis R¹¹ seien voneinander unabhängig Alkyl, ein Rest der Formel -O-R¹², bevorzugt ein Rest der Formel -OR¹², besonders bevorzugt mit R¹² Alkyl, ganz besonders bevorzugt Methyl oder Ethyl und insbesondere Ethyl.
Diese platinkatalysierte Hydrosilylierung wird häufig in der folgenden Weise durchgeführt: Das allophanatgruppenhaltige Umsetzungsprodukt des eingesetzten Di- oder Polyisocyanats (A) mit dem ungesättigten Monoalkohol (B) wird bei Umgebungstemperatur in einem Reaktionsbehälter, der mit einer Einrichtung zur Aufrechterhaltung einer Inertgasabdeckung, bevorzugt Stickstoff oder Argon ausgerüstet ist, unter Inertgasabdeckung mit dem Siliciumhydrid (V), gelöst in einem wasserfreien inerten Lösemittel, versetzt Unter Rühren zugesetzt wird ein Katalysator, wie beispielsweise ein Übergangsmetall, vorzugsweise ein Edelmetall der Nebengruppe VIII, besonders bevorzugt Nickel, Nickelsalze, Iridiumsalze und ganz besonders bevorzugt Chlorplatinsäure oder Karstedt Katalysator (Platin-divinyltetramethyldisiloxan). Die Temperatur wird unter Inertgasabdeckung auf etwa 60 °C erhöht. Die Reaktion kann durch NMR-Spektroskopie auf das Verschwinden des Multipletts des vinylischen Methin-Protons (-CH= 5,9 ppm in CDCl₃) der Allylgruppe überwacht werden.

Das eingesetzte Di- oder Polyisocyanat kann mindestens ein Lösungsmittel enthalten, das nicht reaktiv gegenüber Isocyanatgruppen ist, beispielsweise Ester, Ether, Ketone oder aromatische Kohlenwasserstoffe, wie beispielsweise Toluol oder Xylol-Isomerengemische.

Bei der Verbindung (B) handelt es sich um mindestens einen, bevorzugt genau einen ungesättigten Alkohol (B), der mindestens eine, bevorzugt genau eine C=C-Doppelbindung und mindestens eine, bevorzugt genau eine Hydroxygruppe trägt.

Bei den C=C-Doppelbindungen handelt es sich erfindungsgemäß um nicht-aktivierte Doppelbindungen, soll heißen solche C=C-Doppelbindungen oder konjugierte Doppelbindungssystemen, die mit keinen anderen Gruppen als Wasserstoff und sp³-hybridisierten Kohlenstoffatomen direkt verbunden sind, d.h. in direkter Nachbarschaft. Bei derartigen sp³-hybridisierten Kohlenstoffatomen kann es sich beispielsweise um Alkylgruppen, unsubstituierte Methylengruppen, einfach substituierte (1,1-Alkylengruppen) oder zweifach substituierte Alkylengruppen (n,n-Alkylengruppen) handeln.

Im Fall von konjugierten Doppelbindungssystemen ist die C=C-Doppelbindung mit einer oder mehreren weiteren C=C-Doppelbindungen und/oder aromatischen System konjugiert, wobei es sich bevorzugt um ein bis drei, besonders bevorzugt ein bis zwei und ganz besonders bevorzugt genau eine weitere C=C-Doppelbindungen bzw. bevorzugt um genau ein carbocyclisches aromatisches Ringsystem handelt. Erfindungsgemäß wichtig ist, daß in diesem Fall das konjugierte Doppelbindungssystem mit keinen anderen Gruppen als Wasserstoff und sp³-hybridisierten Kohlenstoffatomen direkt verbunden ist. Bei dem aromatischen Ringsystem handelt es sich um ein carbocyclisches Ringsystem, heteroaromatische Systeme sind erfindungsgemäß ausgeschlossen.

Bevorzugt handelt es sich bei den C=C-Doppelbindungen um isolierte Doppelbindungen, Alkohole (B) mit konjugierten Doppelbindungssystemen sind weniger bevorzugt.

Ausgeschlossen sind dagegen solche C=C-Doppelbindungen, die elektronisch aktiviert sind, also beispielsweise Vinylethergruppen, Acrylat- oder Methacrylatgruppen.

Zwischen den C=C-Doppelbindungen und Hydroxygruppen befindet sich mindestens ein sp³-hybridisiertes Kohlenstoffatom, bevorzugt ein bis zehn, besonders bevorzugt ein bis fünf, ganz besonders bevorzugt ein bis drei, insbesondere ein bis zwei und speziell eines.

Beispiele für derartige Verbindungen (B) sind Allylalkohol (2-Propen-1-ol), Methallylalkohol (2-Methyl-2-propen-1-ol), Homoallylalkohol (3-Buten-1-ol), 1-Buten-3-ol, 3-Methyl-2-buten-1-ol, 2-Methyl-3-buten-2-ol, 1-Octen-3-ol, 2-Hexen-1-ol, 1-Penten-3-ol sowie ferner Phytol, Farnesol und Linalool.

Beispiele für Verbindungen (B) mit mehreren C=C-Doppelbindungen sind 1,4-Pentadien-3-ol, 1,4-Hexadien-3-ol und 5-Methyl-1,4-hexadien-3-ol. Verbindungen mit mehreren C=C-Doppelbindungen sind jedoch weniger bevorzugt.

Ein Beispiel für Verbindungen (B) mit C=C-Doppelbindungen, die zu einem carbocyclischen aromatischen Ringsystem konjugiert sind, ist Zimtalkohol. Verbindungen mit zu Aromaten konjugierten C=C-Doppelbindungen sind jedoch weniger bevorzugt.

Bevorzugt sind Allylalkohol, Methallylalkohol und Homoallylalkohol, besonders bevorzugt ist Allylalkohol.

Bei der Verbindung (C) handelt es sich um solche der Formel (V): 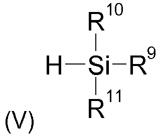 wobei R⁹-R¹¹ die oben stehende Bedeutung haben.

Darin bedeuten R⁹ bis R¹¹ unabhängig voneinander bevorzugt
- einen C₁-C₄-Alkylrest oder
- einen Rest -O-R¹²,
worin
R¹² ein C₁-C₄-Alkyl- oder Phenylrest.

Besonders bevorzugt sind R⁹ bis R¹¹ ausgewählt aus der Gruppe bestehend aus Methyl, Ethyl, iso-Propyl, n-Butyl, tert-Butyl, Methoxy, Ethoxy, tert-Butyloxy und Phenoxy, ganz besonders bevorzugt aus der Gruppe bestehend aus Methyl, Ethyl, Methoxy und Ethoxy.

Bei dem eingesetzten Silanen (C) handelt es sich bevorzugt um Tris(alkyloxy)silane oder Alkyl bis(alkyloxy)silane, besonders bevorzugt um Tris(C₁-C₄-alkyloxy)silane oder C₁-C₄-Alkyl bis(C₁-C₄-alkyloxy)silane.

Bei dem eingesetzten Silanen (C) handelt es sich ganz besonders bevorzugt um Triethylsilan, Tri-iso-propylsilan, Dimethylphenylsilan, Diethoxymethylsilan, Dimethoxymethylsilan, Ethoxydimethylsilan, Phenoxydimethylsilan, Triethoxysilan, Trimethoxysilan, Bistrimethylsiloxymethylsilan oder Gemische davon.

Die Stöchiometrie von ungesättigtem Alkohol (B) zu den Isocyanatgruppen im Di- oder Polyisocyanat (A), beträgt in der Regel von 1:0,1 bis 0,1:1, bevorzugt 1:0,2 bis 0,2:1, besonders bevorzugt 1:0,3 bis 0,3:1, ganz besonders bevorzugt 1:0,5 bis 0,5:1 und insbesonders 1:0,66 bis 0,66:1.

Die Stöchiometrie von Silan (C) nach Formel (V) zu Doppelbindungen im allophanatgruppenhaltigen Polyisocyanat, erhalten durch Umsetzung mit einem ungesättigten Alkohol, beträgt in der Regel von 0,1:1 bis 1,0:1, bevorzugt von 0,5:1 bis 1,0:1, besonders bevorzugt von 0,6:1 bis 1,0:1 und ganz besonders bevorzugt von 0,8:1 bis 1,0:1.

Denkbar ist auch der Einsatz von Verbindungen (C), die mehr als eine Si-H-Bindung tragen, beispielsweise mindestens zwei, bevorzugt zwei bis vier, besonders bevorzugt zwei oder drei und ganz besonders bevorzugt zwei.

Beispiele dafür sind siloxanverbrückte Verbindungen (C1) der Formel 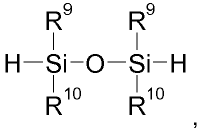 oder deren höheren Homologe mit n = 2 bis 5 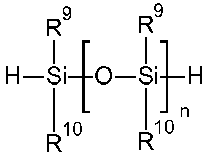 worin R⁹ und R¹⁰ die obigen Bedeutungen haben können.

Beispiele dafür sind Tetramethylsiloxan, Tetraethylsiloxan und Tetraphenylsiloxan.

Die Umsetzung zu den erfindungsgemäßen silylierten Polyisocyanate kann in der ersten Stufe bevorzugt zwischen 40 und 120 °C erfolgen, besonders bevorzugt zwischen 60 und 110 °C und ganz besonders bevorzugt zwischen 80 und 100 °C und in der zweiten Stufe bevorzugt zwischen 40 und 80 °C, besonders bevorzugt zwischen 50 und 70 °C und ganz besonders bevorzugt bei 60 °C.

Erfindungsgemäß wesentlich ist, daß die Umsetzung in der ersten Stufe unter Ausbildung von Allophanatgruppen erfolgt, wobei zumindest ein Teil des ungesättigten Alkohols (B) über Allophanatgruppen gebunden wird.

Eine derartige Reaktion ist bekannt aus US 5739251.

Es ist auch möglich, einen Teil des ungesättigten Alkohols (B) über Allophanatgruppen zu binden und einen Teil des ungesättigten Alkohols (B) über Urethangruppen.

Das Verhältnis von über Allophanatgruppen gebundenem Alkohol (B) zu über Urethangruppen gebundenem Alkohol (B) kann von 1:0 bis 1:2, bevorzugt 1:0,1 bis 1:1,5, besonders bevorzugt von 1:0,3 bis 1:1 und ganz besonders bevorzugt von 1:0,5 bis 1:1 betragen.

Die Umsetzung kann in Substanz, bevorzugt aber in einem inerten, wasserfreien Lösungsmittel durchgeführt werden.

Die Umsetzung des eingesetzten Di- oder Polyisocyanats mit dem ungesättigten Alkohol erfolgt bevorzugt katalysiert, mit oder ohne Zugabe eines Schleppmittels, z.B. Toluol.

Der ungesättigte Alkohol wird je nach gewünschtem Substitutionsgrad im oben angegebenen Verhältnis eingesetzt.

Es stellt eine bevorzugte Ausführungsform der vorliegenden Erfindung dar, das Verhältnis von Alkohol (B) zu Di- oder Polyisocyanat (A) so zu wählen, daß das entstehende allophanatgruppenhaltige Polyisocyanat eine Funktionalität an Alkohol (B) von im statistischen Mittel bevorzugt mindestens 1, bevorzugt 1 bis 3, besonders bevorzugt 1 bis 2 und ganz besonders bevorzugt 1 aufweist. Falls erforderlich kann ein nur wenige Alkoholgruppen (B) tragendes Produkt durch Zugabe weiteren Alkohols (B) weiter umgesetzt werden.

Die Addition des Silans (C) an die Doppelbindung des ungesättigten Alkohols (B) erfolgt übergangsmetallkatalysiert. Als Übergangsmetalle kommen bevorzugt solche der achten Nebengruppe in Frage, besonders bevorzugt Platin, Rhodium, Palladium, Cobalt und Nickel metallisch oder in Form der Komplexe. Ein bevorzugter Katalysator ist z.B. der sogenannte Karstedt Katalysator (Platin-divinyltetramethyldisiloxan) oder Hexachloroplatinsäurehydrat, beispielsweise auch in Form von Speier-Katalysator, also in Form der Lösung in iso-Propanol, sowie Platin auf Aktivkohle.

In der Regel wird die Reaktion in der ersten Stufe so durchgeführt, daß der eingesetzte ungesättigte Alkohol ggf. zusammen mit dem Katalysator vorgelegt, auf die gewünschte Temperatur gebracht und das Di- oder Polyisocyanat ggf. gelöst in einem geeigneten Lösungsmittel langsam dazugegeben wird.

Die Umsetzung mit dem ungesättigten Alkohol erfolgt in Anwesenheit mindestens eines Katalysators. Bevorzugte Katalysatoren sind ausgewählt aus der Gruppe bestehend aus Blei-, Zinn-, Eisen-, Titan-, Aluminium-, Mangan-, Nickel-, Zink-, Cobalt-, Zirkonium- und Wismut-Verbindungen, bevorzugt handelt es sich um Titan-, Aluminium-, Zink-, Zirkonium- oder Wismut-Verbindungen, besonders bevorzugt um Titan-, Zink- oder Wismut-Verbindungen, ganz besonders bevorzugt um Titan- oder Wismut-Verbindungen und insbesondere um Wismut-Verbindungen.

Beispielsweise sind Metallkomplexe wie Acetylacetonate des Eisens, Titans, Aluminiums, Zirkoniums, Mangans, Nickels, Zinks und Cobalts möglich.

Als Zirkonium-, Wismut-, Titan- und Aluminium-Verbindungen werden beispielsweise eingesetzt: Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Aluminiumdionat (z.B. K-KAT® 5218 der Firma King Industries).

Als Zinkverbindungen kommen dabei solche in Betracht, in denen folgende Anionen eingesetzt werden: F⁻, Cl⁻, ClO⁻, ClO₃⁻, ClO4⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei die Carboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Salze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat, Neodekanoat und 2-Ethylhexanoat.

Unter den Zink-Katalysatoren sind die Zink-carboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(II) neodecanoat. Handelsübliche Katalysatoren sind beispielsweise Borchi® Kat 22 von OMG Borchers GmbH, Langenfeld, Deutschland.

Unter den Titanverbindungen sind die Titan tetra-alkoholate Ti(OR)₄ bevorzugt, besonders bevorzugt solche von Alkoholen ROH mit 1 bis 8 Kohlenstoffatomen, beispielsweise Methanol, Ethanol, *iso*-Propanol, n-Propanol, n-Butanol, *iso*-Butanol, *sek*-Butanol, *tert-*Butanol, n-Hexanol, n-Heptanol, n-Octanol, bevorzugt sind Methanol, Ethanol, *iso*-Propanol, n-Propanol, n-Butanol, *tert*-Butanol, besonders bevorzugt sind iso-Propanol und n-Butanol.

Bevorzugt als Katalysator wird mindestens eine Wismutverbindung eingesetzt, beispielsweise ein bis drei, bevorzugt ein oder zwei und besonders bevorzugt benau eine Wismutverbindung der Oxidationsstufe +3.

Als Wismutverbindungen kommen dabei bevorzugt Wismutverbindungen mit folgenden Anionen in Betracht: F⁻, Cl⁻, ClO⁻, ClO₃⁻, ClO₄⁻, Br⁻, J⁻, JO₃⁻, CN⁻, OCN⁻, NO2⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₓH₂ₓ₊₁)⁻, (CₓH₂ₓ₋₁O₂)⁻, (CₓH₂ₓ₋₃O₂)⁻ sowie (Cₓ₊₁H₂ₓ₋₂O₄)²⁻, wobei x für die Zahlen 1 bis 20 steht. Bevorzugt sind dabei die Carboxylate, bei denen das Anion den Formeln (CₓH₂ₓ₋₁O₂)⁻ sowie (Cₓ₊₁H₂ₓ₋₂O₄)²⁻ mit x gleich 1 bis 20, gehorcht. Besonders bevorzugte Salze weisen als Anionen Monocarboxylate der allgemeinen Formel (CₓH₂ₓ₋₁O₂)⁻ auf, wobei x für die Zahlen 1 bis 20, bevorzugt 1 bis 10 steht. Hierbei sind insbesondere zu erwähnen Format, Acetat, Propionat, Hexanoat, Neodekanoat und 2-Ethylhexanoat.

Unter den Wismut-Katalysatoren sind die Wismut-carboxylate bevorzugt, besonders bevorzugt solche von Carboxylaten, die mindestens sechs Kohlenstoffatome aufweisen, insbesondere Wismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.

Es kann sich dabei auch um Gemische verschiedener Metalle handeln, wie beispielsweise in Borchi® Kat 0245 von OMG Borchers GmbH, Langenfeld, Deutschland

Besonders bevorzugt sind jedoch Wismut neodecanoat, Wismut-2-ethylhexanoat und Zink-2-ethylhexanoat.

Es ist möglich, die Wirkung der Katalysatoren zusätzlich durch Anwesenheit von Säuren zu verstärken, beispielsweise durch Säuren mit einem pKa-Wert von < 2,5, wie beschrieben in EP 2316867 A1 oder mit einem pKa-Wert zwischen 2,8 und 4,5, wie beschrieben in WO 04/029121 A1. Bevorzugt ist die Verwendung von Säuren mit einem pKa-Wert von nicht mehr als 4,8, besonders bevorzugt von nicht mehr als 2,5.

In einer bevorzugten Ausführungsform der vorliegenden Erfindung erfolgt die Katalyse unter Ausbildung von Allophanatgruppen durch Reaktion des monomeren Diisocyanats in Gegenwart von quartären Ammonium salzen, bevorzugt quartären Ammonium carboxylaten, -carbonaten, -phenolaten oder -hydroxiden.

Besonders geeignet als Katalysatoren für das Verfahren sind quartäre Ammoniumsalze entsprechend der Formel 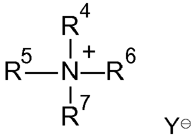 mit
Y^{⊖}= Carboxylat (R⁸COO⁻), Fluorid (F⁻), Carbonat (R⁸O(CO)O⁻) oder Hydroxid (OH⁻),
wie sie für Y⁻ = OH⁻ im US-Patent 4,324,879 und in den Deutschen Offenlegungsschriften 2,806,731 und 2,901,479 beschrieben sind.

Bevorzugt handelt es sich bei dem Rest Y^{⊖} um ein Carboxylat, Carbonat oder Hydroxid, besonders bevorzugt um ein Carboxylat oder Hydroxid und ganz besonders bevorzugt um ein Carboxylat.

R⁸ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R⁸ Wasserstoff oder C₁ bis C₈-Alkyl.

Bevorzugte quartäre Ammoniumsalze sind diejenigen, bei denen die Reste R⁴ bis R⁷ gleiche oder unterschiedliche Alkylgruppen mit 1 bis 20, vorzugsweise 1 bis 4 Kohlenstoffatomen darstellen, die gegebenenfalls durch Hydroxyl- oder Phenylgruppen substituiert sind.

Zwei der Reste R⁴ bis R⁷ können auch zusammen mit dem Stickstoffatom und gegebenenfalls einem weiteren Stickstoff- oder Sauerstoffatom einen heterocyclischen, fünf-, sechs- oder siebengliedrigen Ring bilden. Die Reste R⁴ bis R⁷ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R⁷ dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder Di-aza-bicyclo-[2.2.2]-octan.

Beispiele für 1 bis 20 Kohlenstoffatome aufweisende Gruppen R⁴ bis R⁷ sind unabhängig voneinander Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, hexadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Methylnaphthyl, Isopropylnaphthyl, Chlornaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbornyl oder Norbornenyl.

Bevorzugt sind unabhängig voneinander die Reste R⁴ bis R⁷ C₁ bis C₄-Alkyl. R⁷ kann zusätzlich Benzyl sein oder ein Rest der Fomel 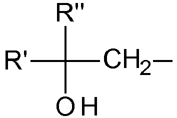 worin R' und R" unabhängig voneinander Wasserstoff oder C₁ bis C₄-Alkyl sein kann.

Besonders bevorzugte Reste R⁴ bis R⁷ sind unabhängig voneinander Methyl, Ethyl und n-Butyl und für R⁷ zusätzlich Benzyl, 2-Hydroxyethyl und 2-Hydroxypropyl.

Bevorzugt können für das erfindungsgemäße Verfahren folgende Katalysatoren eingesetzt werden:
Quarternäre Ammoniumhydroxide, vorzugsweise N,N,N-Trimethyl-N-benzylammo-niumhydroxid und N,N,N-Trimethyl-N-(2-hydroxypropyl)-ammoniumhydroxid.

Bei einigen der oben genannten Katalysatoren, beispielsweise bei den aufgeführten Ammonium salzen, wird in der Regel ein Teil des Diisocyanats zu einem isocyanuratgruppenhaltigen Polyisocyanat umgesetzt, das seinerseits mit dem ungesättigten Alkohol (B) unter Bildung von Urethan- und/oder Allophanatgruppen reagieren kann, und ein anderer Teil zum gewünschten allophanatgruppenhaltigen Polyisocyanat.

Das Gewichtsverhältnis von isocyanuratgruppenhaltigem Polyisocyanat und gewünschtem allophanatgruppenhaltigen Polyisocyanat ohne Isocyanuratgruppen hängt von den Reaktionsbedingungen ab und kann beispielsweise 10:90 bis 90:10, bevorzugt 20:80 bis 80:20, besonders bevorzugt 30:70 bis 70:30 und ganz besonders bevorzugt 40:60 bis 60:40 betragen.

Es wird ein Katalysator eingesetzt, mit dem überwiegend allophanatgruppenhaltige Polyisocyanate ohne Isocyanuratgruppen erhalten werden.
Im Reaktionsgemisch beträgt der Anteil an Polyisocyanaten mit anderen funktionellen Gruppen als Allophanatgruppen weniger als 50 Gew.-%, bevorzugt nicht mehr als 40, insbesondere nicht mehr als 30, speziell nicht mehr als 20 und sogar nicht mehr als 10 Gew.-%.

Unter Polyisocyanaten mit anderen funktionellen Gruppen als Allophanatgruppen werden dabei insbesondere isocyanuratgruppenhaltige Polyisocyanate verstanden, aber auch urethangruppenhaltige Polyisocyanate und/oder uretdiongruppenhaltige Polyisocyanate, wober letztere weniger bevorzugt sind.

Das erhaltene Reaktionsprodukt kann durch Säulenchromatographie an Kieselgel (Silicagel Si 60, 40-63 µm, Merck) mit einem Laufmittelgemisch aus Ethylacetat und Pentan im Verhältnis 1:2 gereinigt werden. Das Rohprodukt enthält allerdings in der Regel nur geringe Verunreinigungen und kann ohne weitere Aufreinigung in die folgende Synthese eingesetzt werden.

In der Regel wird die zweite Reaktionsstufe so durchgeführt, dass das Vorprodukt aus der ersten Reaktionsstufe bevorzugt unter inerter Atmosphäre zusammen mit dem entsprechenden Silan in einem wasserfreien, inerten Lösemittel vorgelegt und unter starkem Rühren mit einer Lösung des Übergangsmetallkatalysators in demselben Lösemittel versetzt wird. Die Reaktionsmischung wird bei oben genannter Temperatur 30 Minuten bis 3 Stunden, bevorzugt 1 bis 2 Stunden gerührt und ggf. anschließend unter vermindertem Druck von Lösemittel befreit. Eine Aufarbeitung des Produkts ist zumeist nicht erforderlich und wird bevorzugt nicht durchgeführt.

Das erhaltene silylierte Polyisocyanat weist eine Viskosität bei 23 °C gemäß
ISO 3219/B von bevorzugt zwischen 100 und 20000 mPas, besonders bevorzugt zwischen 500 und 10000 mPas auf.

Die Scherrate sollte dabei bevorzugt 250 s⁻¹ betragen.

Das zahlenmittlere Molgewicht Mₙ der erhaltenen silylierten allophanatgruppenhaltigen Polyisocyanate beträgt in der Regel weniger als 3500 g/mol, bevorzugt von weniger als 3000 g/mol und besonders bevorzugt von weniger als 2500 auf (bestimmt durch Gelpermeationschromatographie mit Tetrahydrofuran und Polystyrol als Standard,
DIN 55672, Teil 1).

In einer bevorzugten Ausführungsform handelt es sich bei dem silylierten allophanatgruppenhaltigen Polyisocyanat um ein Polyisocyanat der folgenden idealisierten Formel 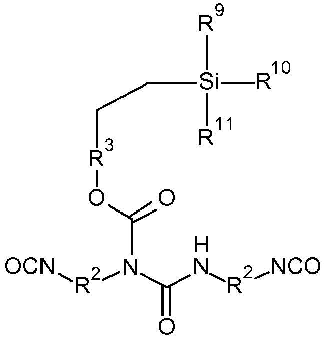 worin
R² einen Rest darstellt, wie er durch gedankliche Abstraktion zweier Isocyanatgruppen von einem Diisocyanat entsteht,
R³ einen zweiwertigen aliphatischen, 1 bis 12 Kohlenstoffatome aufweisenden Kohlenwasserstoffrest bedeutet, und
R⁹ bis R¹¹ wie oben definiert sind.

Bevorzugte Reste R² sind ausgewählt aus der Gruppe bestehend aus 1,5-Pentylen, 1,6-Hexylen, 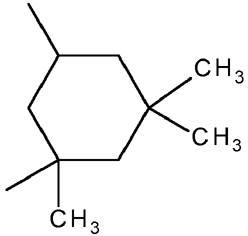 und

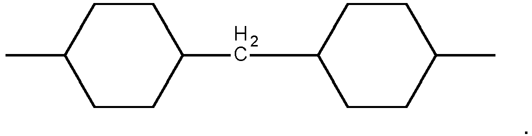

Bevorzugt handelt es sich bei dem Rest R² um 1,6-Hexylen oder 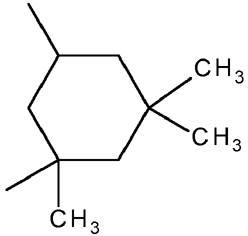 und besonders bevorzugt um 1,6-Hexylen.

In einer bevorzugten Ausführungsform weist R³ 1 bis 8, besonders bevorzugt 1 bis 4, ganz besonders bevorzugt 1 bis 2 und insbesondere genau ein Kohlenstoffatom auf.

Beispiele für R³ sind Methylen, 1,2-Ethylen, 1,1-Dimethyl-1,2-ethylen, 1,2-Propylen, 1,3-Propylen, 2-Methyl-1,3-propylen, 2-Ethyl-1,3-propylen, 2-Butyl-2-ethyl-1,3-propylen, 2,2-Di-methyl-1,3-propylen, 1,2-Butylen, 1,3-Butylen, 1,4-Butylen, 1,5-Pentylen, 1,6-Hexylen, 2-Ethyl-1,3-hexylen, 1,8-Octylen, 2,4-Diethyl-1,3-octylen oder 1,10-Decylen, bevorzugt Methylen, 1,2-Ethylen, 1,2-Propylen, 1,3-Propylen oder 1,4-Butylen, besonders bevorzugt Methylen.

Denkbar sind darüberhinaus auch die höheren Homologen dieser idealisierten Formel, in denen durch Addition mehrerer Diisocyanate mehrere Allophanatgruppen, beispielsweise bis zu drei, bevorzugt bis zu zwei Allophanatgruppen, ausgebildet werden. Bevorzugt weist das silylierte allophanatgruppenhaltige Polyisocyanat einen NCO-Gehalt von 12 bis 24, bevorzugt 14 bis 22 und besonders bevorzugt 15 bis 21 Gew.-% auf.

Das erfindungsgemäß erhaltene silylierte Polyisocyanat kann anschließend mit gängigen Lösungsmitteln vermischt werden.

Beispiele für derartige Lösungsmittel sind aromatische und/oder (cyclo)aliphatische Kohlenwasserstoffe und deren Gemische, halogenierte Kohlenwasserstoffe, Ester, Ether und Alkohole.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 bis 178 °C), 150 (Siedebereich etwa 182 bis 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 bis 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 bis 180 °C, schwer: Siedebereich etwa 225 bis 300 °C,) im Handel erhältlich. Der Aromatengehalt derartiger Kohlenwasserstoffgemische beträgt in der Regel mehr als 90 Gew.-%, bevorzugt mehr als 95, besonders bevorzugt mehr als 98 und ganz besonders bevorzugt mehr als 99 Gew.-%. Es kann sinnvoll sein, Kohlenwasserstoffgemische mit einem besonders verringerten Gehalt an Naphthalin einzusetzen.

Die Dichte bei 20 °C gemäß DIN 51757 der Kohlenwasserstoffe kann weniger als 1 g/cm³ aufweisen, bevorzugt weniger als 0,95 und besonders bevorzugt weniger als 0,9 g/cm³.

Der Gehalt an aliphatischen Kohlenwasserstoffen beträgt in der Regel weniger als 5, bevorzugt weniger als 2,5 und besonders bevorzugt weniger als 1 Gew.-%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat, sowie die Mono- und Diacetylester von Ethylenglykol, Diethylenglykol, Triethylenglykol, Propylenglykol, Dipropylenglykol oder Tripropylenglykol, wie beispielsweise Butylglykolacetat. Weitere Beispiele sind auch Carbonate, wie bevorzugt 1,2-Ethylencarbonat, 1,2-Propylencarbonat oder 1,3-Propylencarbonat.

Ether sind beispielsweise Tetrahydrofuran (THF), Dioxan sowie die Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen.

Derartige Gemische können im Volumenverhältnis 10:1 bis 1:10 erstellt werden, bevorzugt im Volumenverhältnis 5:1 bis 1:5 und besonders bevorzugt im Volumenverhältnis 1:1.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Alkohole sind beispielsweise Methanol, Ethanol, n-Propanol, iso-Propanol, n-Butanol, sek-Butanol, iso-Butanol, Pentanol-Isomerengemische, Hexanol-Isomerengemische, 2-Ethylhexanol oder Oktanol.

Es stellt einen Vorteil der erfindungsgemäßen silylierten Polyisocyanate dar, daß sie in Lacken den unsilylierten Polyisocyanaten vergleichbare oder sogar verbesserte Eigenschaften bzgl. Glanz und Härte zeigen. Zusätzlich weisen sie einen weiteren Vernetzungsmechanismus über die enthaltenen Silylgruppen auf.

Ferner weisen sie eine geringere Viskosität auf als Polyisocyanat gleichen Molgewichts und gleicher Funktionalität, so daß in Beschichtungsmassen ein geringerer Bedarf an Lösungsmittel zur Erzielung der Applikationsviskosität besteht.

Die Härtung erfolgt in der Regel so, daß nach Aufbringen der Beschichtung der Substrate mit den die erfindungsgemäßen Polyisocyanaten enthaltenden Beschichtungsmassen oder Lackformulierungen, gegebenenfalls mit weiteren lacktypischen Additiven und thermisch härtbaren Harzen versetzt, gegebenenfalls bei einer Temperatur unter 80 °C, bevorzugt Raumtemperatur bis 60 °C und besonders bevorzugt Raumtemperatur bis 40 °C über einen Zeitraum bis zu 72 Stunden, bevorzugt bis zu 48 Stunden, besonders bevorzugt bis zu 24 Stunden, ganz besonders bevorzugt bis zu 12 und insbesondere bis zu 6 Stunden trocknet, und unter sauerstoffhaltiger Atmosphäre, bevorzugt Luft, oder unter Inertgas bei Temperaturen zwischen 80 und 270, bevorzugt zwischen 100 und 240 und besonders bevorzugt zwischen 120 und 180 °C thermisch behandelt (härtet). Die Lackhärtung erfolgt in Abhängigkeit der Menge an aufgetragenem Beschichtungsstoff und der eingetragenen Vernetzungsenergie über energiereiche Strahlung, Wärmeübergang von beheizten Oberflächen oder über Konvektion von gasförmigen Medien über einen Zeitraum von Sekunden, z.B. bei Bandlackierung in Kombination mit NIR-Trocknung, bis zu 5 Stunden, z.B. Dickschichtsysteme auf temperaturempfindlichen Materialien, meist nicht weniger als 10 min, bevorzugt nicht weniger als 15, besonders bevorzugt nicht weniger als 30 und ganz besonders bevorzugt nicht weniger als 45 min. In der Trocknung wird im Wesentlichen vorhandenes Lösungsmittel entfernt, darüber hinaus kann auch bereits eine Reaktion mit dem Bindemittel stattfinden, wohingegen die Härtung im wesentlichen die Reaktion mit dem Bindemittel umfasst.

Die Härtung kann auch zusätzlich oder anstelle der thermischen Härtung durch IR- und NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Härtung erfolgt in einem Zeitraum von 1 Sekunde bis 60 min, bevorzugt von 1 min bis 45 min.

Ein weiterer Gegenstand der vorliegenden Erfindung sind Beschichtungsmassen, die mindestens ein erfindungsgemäßes silyliertes Polyisocyanat enthalten.

Als Bindemittel enthalten derartige Beschichtungsmassen mindestens ein Bindemittel, das gegenüber Isocyanat reaktive Gruppen enthält. Diese sind in der Regel ausgewählt aus der Gruppe bestehend aus hydroxygruppenhaltigen Bindemitteln und aminogruppenhaltigen Bindemitteln.

Bevorzugt handelt es sich bei dem hydroxygruppenhaltigen Bindemittel um Polyetherole, Polyesterole, Polyacrylatpolyole, Polycarbonatpolyole, Alkydharze oder Epoxyharze. Besonders bevorzugt sind Polyesterole und Polyacrylatpolyole, ganz besonders bevorzugt sind Polyacrylatpolyole.

Die Bindemittel weisen pro Molekül statistisch im Mittel mindestens zwei, bevorzugt zwei bis zehn, besonders bevorzugt drei bis zehn und ganz besonders bevorzugt drei bis acht Hydroxygruppen auf.

Die OH-Zahl, gemessen gemäß DIN 53240-2, beträgt in der Regel von 10 bis 200 mg KOH/g, bevorzugt von 30 bis 140.

Zusätzlich können die Bindemittel eine Säurezahl gemäß DIN EN ISO 3682 von 0 bis 200 mg KOH/g, bevorzugt 0 bis 100 und besonders bevorzugt 0 bis 10 mg KOH/g aufweisen.

Bei den Polyacrylatpolyole handelt es sich beispielsweise um solche, Copolymere von (Meth)Acrylsäureestern mit mindestens einer Verbindung mit mindestens einer, bevorzugt genau einer Hydroxygruppe und mindestens einer, bevorzugt genau einer (Meth)Acrylatgruppe.

Letztere können beispielsweise Monoester von α,β-ungesättigten Carbonsäuren, wie Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Me-thyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 2000, Poly-1,3-pro-pandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, bevorzugt um solche, welche zu mehr als 50 Gew.-% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew.-% aus C₁-C₁₀-Alkyl(meth)acrylaten, Styrol oder deren Mischungen bestehen. Darüber können die Polymeren hydroxyfunktionelle Monomere entsprechend dem obigen Hydroxygruppengehalt und gegebenenfalls weitere Monomere enthalten, z.B. ethylenisch ungesättigte Säuren, insbesondere Carbonsäuren, Säureanhydride oder Säureamide.

Weitere Bindemittel sind Polyesterole, wie sie durch Kondensation von Polycarbonsäuren, insbesondere Dicarbonsäuren mit Polyolen, insbesondere Diolen erhältlich sind.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)-propan, 1,1-, 1,2-, 1,3- und 1,4-Cyclohexandimethanol, 1,2-, 1,3- oder 1,4-Cyclo-hexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Bei den Polymeren kann es sich natürlich auch um Verbindungen mit primären oder sekundären Aminogruppen handeln.

Ferner kommen auch Polycarbonatpolyole, wie sie z.B. durch Umsetzung von Phosgen mit einem Überschuß von den als Aufbaukomponenten für die Polyesterpolyole genannten niedermolekularen Alkohole erhalten werden können, in Betracht.

Bei Alkydharzen handelt es sich um Polykondensationsharze aus Polyolen, mehrwertigen Carbonsäuren und fetten Ölen oder freien natürlichen und/oder synthetischen Fettsäuren; mindestens ein Polyol muß tri- oder höherfunktionell sein.
Als Polyole und mehrwertige Carbonsäuren können beispielsweise die Komponenten eingesetzt werden, die oben bei den Polyesterolen genannt sind.

Bevorzugte mehrwertige Alkohole sind Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure.

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl, oder freie Fettsäuren obiger Öle oder synthetische Monocarbonsäuren in Betracht.

Die Molmasse von typischer Alkydharze liegt zwischen 1500 und 20000, bevorzugt zwischen 3500 und 6000. Die Säurezahl beträgt bevorzugt 2 bis 30 mg KOH/g, bei wasserverdünnbaren Harzen auch 35 bis 65 mg KOH/g. Die OH-Zahl beträgt in der Regel bis zu 300, bevorzugt bis zu 100 mg KOH/g.

Derartige Polyacrylatpolyole, Polyesterole und/oder Polyetherole weisen bevorzugt ein Molekulargewicht Mₙ von mindestens 1000, besonders bevorzugt mindestens 2000 und ganz besonders bevorzugt mindestens 5000 g/mol auf. Das Molekulargewicht Mₙ kann beispielsweise bis 200.000, bevorzugt bis zu 100.000, besonders bevorzugt bis zu 80.000 und ganz besonders bevorzugt bis zu 50.000 g/mol betragen.

Des weiteren können die erfindungsgemäßen Polyisocyanate auch zusammen mit nicht-vernetzbaren Bindemitteln, d.h. solchen ohne gegen Isocyanat reaktive Gruppen, eingesetzt werden. In diesem Fall vernetzen die erfindungsgemäßen Polyisocyanate durch Kondensation ihrer Silangruppen untereinander.

Die Vernetzung wird in der Regel durch Zugabe von Säuren beschleunigt.

Unter schwachen Säuren werden dabei im Rahmen dieser Schrift ein- oder mehrwertige, organische oder anorganische, bevorzugt organische Säuren mit einem pKs-Wert zwischen 1,6 und 5,2, bevorzugt zwischen 1,6 und 3,8 verstanden.

Beispiele dafür sind Kohlensäure, Phosphorsäure, Ameisensäure, Essigsäure und Maleinsäure, Glyoxylsäure, Bromessigsäure, Chloressisgsäure, Thioglykolsäure, Glycin, Cyanessigsäure, Acrylsäure, Malonsäure, Hydroxypropandisäure, Propionsäure, Milchsäure, 3-Hydroxypropionsäure, Glycerylsäure, Alanin, Sarcosin, Fumarsäure, Acetoessigsäure, Bernsteinsäure, iso-Buttersäure, Pentansäure, Ascorbinsäure, Zitronensäure, Nitrilotriessigsäure, Cyclopentancarbonsäure, 3-Methylglutarsäure, Adipinsäure, Hexansäure, Benzoesäure, Cyclohexancarbonsäure, Heptandionsäure, Heptansäure, Phthalsäure, Isophthalsäure, Terephthalsäure, Tolylsäure, Phenylessigsäure, Phenoxyessigsäure, Mandelsäure oder Sebacinsäure.

Bevorzugt sind organische Säuren, bevorzugt ein- oder mehrwertige Carbonsäuren. Besonders bevorzugt sind Ameisensäure, Essigsäure, Maleinsäure oder Fumarsäure.

Unter starken Säuren werden dabei im Rahmen dieser Schrift ein- oder mehrwertige, organische oder anorganische, bevorzugt organische Säuren mit einem pKs-Wert von weniger als 1,6 und besonders bevorzugt weniger als 1 verstanden.

Beispiele dafür sind Schwefelsäure, Pyrophosphorsäure, Schweflige Säure und Tetrafluoroborsäure, Trichloressigsäure, Dichloressigsäure, Oxalsäure, Nitroessigsäure. Bevorzugt sind organische Säuren, bevorzugt organische Sulfonsäuren. Besonders bevorzugt sind Methansulfonsäure, para-Toluolsulfonsäure, Benzolsulfonsäure, Dodecylbenzolsulfonsäure, Cyclododekansulfonsäure und Camphersulfonsäure.

Die Säuren werden im allgemeinen in Mengen bis zu 10 Gew.-%, bevorzugt 0,1 bis 8, besonders bevorzugt 0,3 bis 6, ganz besonders bevorzugt 0,5 bis 5 und insbesondere von 1 bis 3 Gew.-% bezogen auf das eingesetzte Polyurethan eingesetzt.

Weiter können die Säuren als freie Säuren oder blockiert eingesetzt werden.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Evonik, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin® -Marken der BASF SE, Ludwigshafen) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperi-dyl)se-bacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Pigmente können ebenfalls enthalten sein. Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente.

Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Die erfindungsgemäßen Beschichtungsmassen sind also folgendermaßen zusammengesetzt:
- mindestens ein erfindungsgemäßes silyliertes allophanatgruppenhaltiges Polyisocyanat,
- gegebenenfalls mindestens einen Katalysator, der die Umsetzung von isocyanatgruppen mit gegenüber Isocyanat reaktiven Gruppen zu katalysieren vermag,
- mindestens ein Bindemittel mit gegenüber Isocyanat reaktiven Gruppen,
- gegebenenfalls mindestens ein lacktypisches Additiv,
- gegebenenfalls mindestens ein Lösungsmittel sowie
- gegebenenfalls mindestens ein Pigment.

Die Beschichtung der Substrate mit den erfindungsgemäßen Beschichtungsmassen erfolgt nach üblichen, dem Fachmann bekannten Verfahren, wobei man wenigstens eine erfindungsgemäße Beschichtungsmasse oder Lackformulierung auf das zu beschichtende Substrat in der gewünschten Stärke aufbringt und die flüchtigen Bestandteile der Beschichtungsmasse, gegebenenfalls unter Erhitzen, entfernt (Trocknen). Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Anschließend kann wie oben beschrieben gehärtet werden.

Geeignete Substrate für die erfindungsgemäßen Beschichtungsmassen sind beispielsweise thermoplastische Polymere, insbesondere Polymethylmethacrylate, Polybutylmethacrylate, Polyethylenterephthalate, Polybutylenterephthalate, Polyvinylidenfluoride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP(Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PVC (Polyvinylchloride), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt sind Polyolefine, PMMA und PVC.

Ganz besonders bevorzugt ist ASA, insbesondere gemäß DE 196 51 350 und der Blend ASA/PC. Bevorzugt ist ebenfalls Polymethylmethacrylat (PMMA) oder schlagzähmodifiziertes PMMA.

Ein weiterhin bevorzugtes Substrat zur Beschichtung mit den erfindungsgemäßen Beschichtungsmassen sind Metalle, die gegebenenfalls mit einem Primer vorbehandelt sein können.

Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Insbesondere handelt es sich um Oberflächen von Eisen, Stahl, Zn, Zn-Legierungen, Al oder Al-Legierungen. Es kann sich dabei um die Oberflächen von vollständig aus den besagten Metallen bzw. Legierungen bestehenden Körpern handeln. Die Körper können aber auch nur mit diesen Metallen beschichtet sein und selbst aus andersartigen Materialien bestehen, beispielsweise aus anderen Metallen, Legierungen, Polymeren oder Verbundwerkstoffen. Es kann sich um Oberflächen von Gußteilen, aus verzinktem Eisen oder Stahl handeln. In einer bevorzugten Ausführungsform der vorliegenden Erfindung handelt es sich um Stahloberflächen.

Zn- oder AI-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen Al- und Zn in annähernd gleicher Menge vorhanden sind. Mit derartigen Legierungen beschichteter Stahl ist kommerziell erhältlich. Der Stahl kann die üblichen, dem Fachmann bekannten Legierungskomponenten enthalten.

Denkbar ist auch die Anwendung der erfindungsgemäßen Beschichtungsmassen zur Behandlung von verzinntem Eisen/Stahl (Weißblech).

Die erfindungsgemäßen Beschichtungsmassen und Lackformulierungen eignen sich weiterhin zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien, besonders bevorzugt Metallen.

Die erfindungsgemäßen Polyisocyanate, Beschichtungsmassen oder Lackformulierungen eignen sich als oder in Außenbeschichtungen, also solche Anwendungen, die dem Tageslicht ausgesetzt sind, bevorzugt von Gebäudeteilen, Innenbeschichtungen, Beschichtungen auf Fahrzeugen und Flugzeugen. Insbesondere werden die erfindungsgemäßen Polyisocyanate und Beschichtungsmassen als oder in Automobilklar- und -decklacke(n) eingesetzt. Weitere bevorzugte Einsatzgebiete sind Can-Coating und Coil-Coating.

Besonders eignen sie sich als Grundierungen, Füller, pigmentierte Decklacke und Klarlacke im Bereich Industrie-, Holz-, Auto-, insbesondere OEM-Lackierung, oder Dekolackierung eingesetzt werden. Ganz besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit gefordert werden.

Ferner wurde gefunden, dass erfindungsgemäße silylgruppentragende Polyisocyanate zur Ausbildung eines Gradienten innerhalb einer Beschichtung befähigt sind (auch als Stratifizierung bezeichnet), mit der gleichzeitig Härte und Elastizität der Beschichtung verbessert werden können.

Häufig sind Härte und Elastizität gegenläufige Eigenschaften, d.h. mit zunehmender Härte einer Beschichtung nimmt oftmals deren Elastizität ab und umgekehrt.
Die Härte wird dabei an der Außenseite einer Beschichtung gefordert, beispielsweise zur Verbesserung der Kratzfestigkeit, wohingegen die Elastizität einer Beschichtung innerhalb der Beschichtung zur Verbesserung z.B. der Steinschlagfestigkeit erforderlich ist. Dies wurde bisher erreicht durch Aufbringen mindestens zweier unterschiedlicher Beschichtungsmassen, die die jeweils gewünschten Eigenschaften zeigen, in getrennten Beschichtungs- und Trocknungs- bzw. Härtungsschritten. Durch den Einsatz der erfindungsgemäßen silylgruppentragende Polyisocyanate ist dies nun auch in Polyurethanlacken in einem Auftrag möglich.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Herstellung eines allophanatgruppenhaltigen Polyisocyanat aus 1,6-Hexamethylendiisocyanat (HDI) und Allylalkohol

336 g Hexamethylendiisocyanat (2,0 mol) wurden mit 11,6 g Allylalkohol (0,2 mol) versetzt und auf 80 °C erwärmt. Zu der klaren Lösung wurden 200ppm (2-Hydroxypropyl)-N,N,N-trimethylammonium-2-ethylhexanoat-Lösung (DABCO® TMR der Firma AirProducts) zugegeben. Die Mischung wurde 30 Minuten bei 80 °C gehalten. Der NCO Gehalt betrug 40,8 %. Zu der Mischung wurden 0,2 ml Diethylhexylphosphat gegeben. In einem Dünnschichtverdampfer wurde bei 165 °C Außentemperatur und 5 mbar nicht umgesetztes Monomer entfernt. Das Produkt zeigte einen NCO Gehalt von 20,8 % und eine Viskosität von 260 mPas. Das Gewichtsverhältnis von isocyanuratgruppenhaltigem Polyisocyanat (im Reaktionsschema nicht aufgeführt) zu allophanatgruppenhaltigem Polyisocyanat betrug 1,6 (nach GPC Analyse).

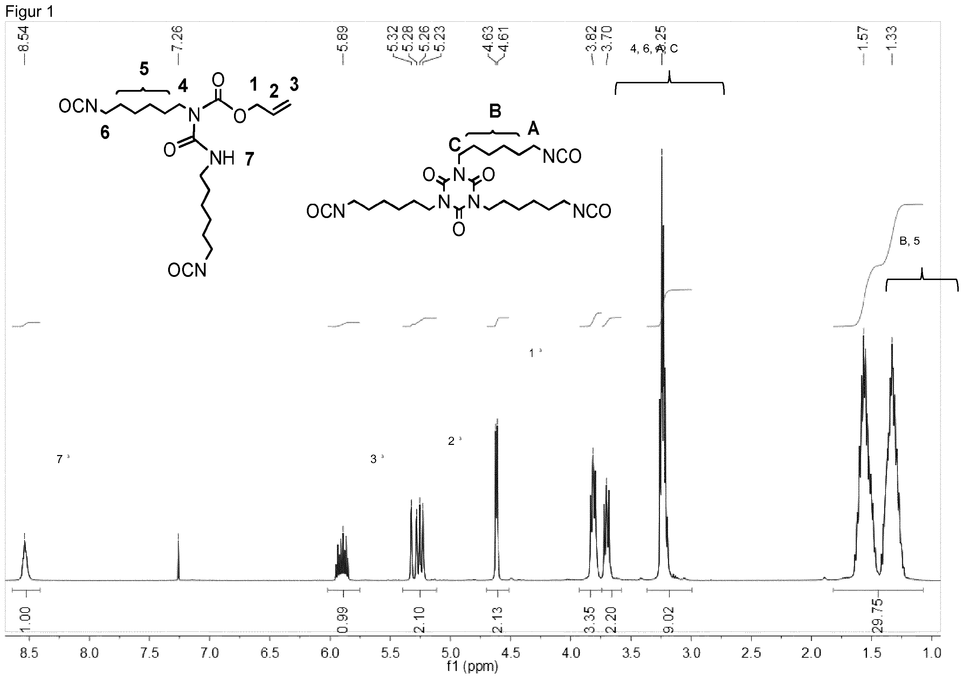

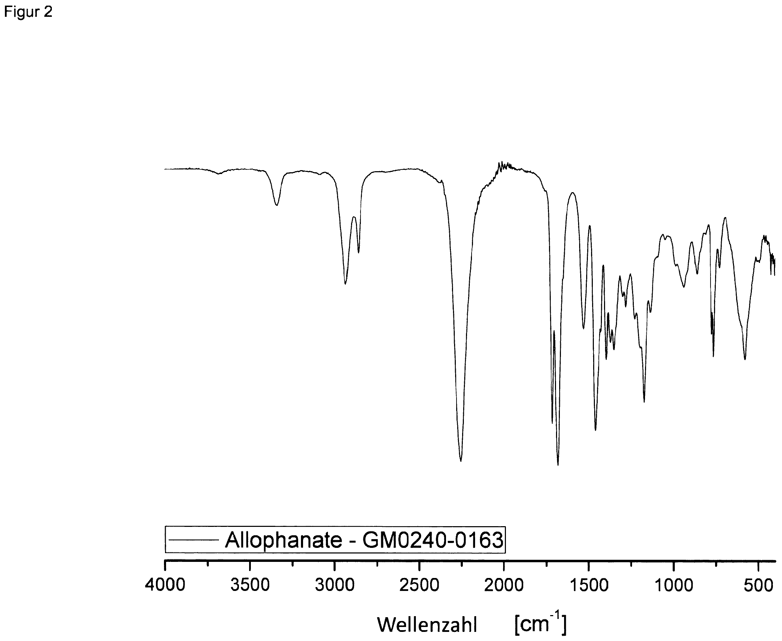

Das Produkt wurde durch IR- (Figur 2) und ¹H-NMR Spektroskopie (Figur 1) charakterisiert.

### Beispiele:

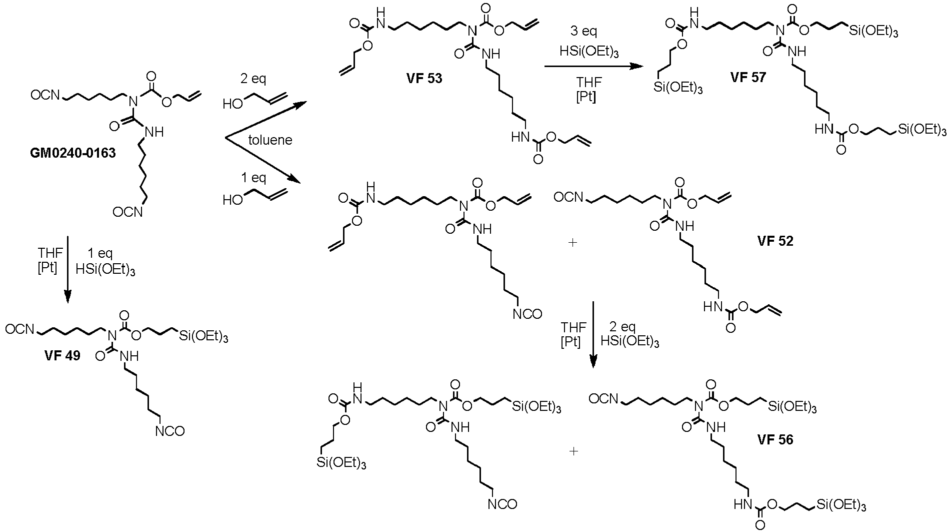

Die Reaktionen wurden durchgeführt wie angegeben und die Produkte durch IR- und ¹H-NMR Spektroskopie charakterisiert.

Bei dem allophanatgruppenhaltigen Polyisocyanat, sowie den Produkten **VF 49, VF 52** und **56** handelt es sich sich um niedrigviskose Öle, wohingegen es sich bei der dreifach funktionalisierten Verbindung um ein hochviskoses Öl handelt.

Es wurden folgende Oberflächenspannungen bestimmt:

| | |
|---|---|
| allophanatgruppenhaltiges Polyisocyanat | 41,84 ± 0,80 mN/m |
| **VF 52:** | 42,14 ± 0,99 mN/m |
| **VF 49:** | 29,49 ± 0,78 mN/m |
| **VF 56:** | 31,36 mN/m |

Man sieht, daß die Einführung von Silylgruppen die Oberflächenspannung verringert.

### Beispiel 1:

5 g des oben hergestellten allophanatgruppenhaltigen Polyisocyanats wurden in 20 mL trockenem THF gelöst, 2.6 mL Triethoxysilan der Fa. ABCR wurden zugegeben, die Lösung auf 65 °C erwärmt und unter starkem Rühren wurden 50 µl einer Lösung von Pt-divinyltetramethyldisiloxan (2,1% Pt) in Xylol der Fa. ABCR Gelest zugegeben. Der Reaktionsfortschritt wurde über ¹H-NMR-Spektroskopie verfolgt. Nach 3 Stunden Reaktionszeit wurden nochmals 50 µl der Katalysatorlösung zugegeben. Nach 17 Stunden Reaktionszeit wurden die Lösemittel bei 40 °C unter vermindertem Druck abdestilliert. Man erhielt das Produkt **VF 49** als hellgelbes Öl.

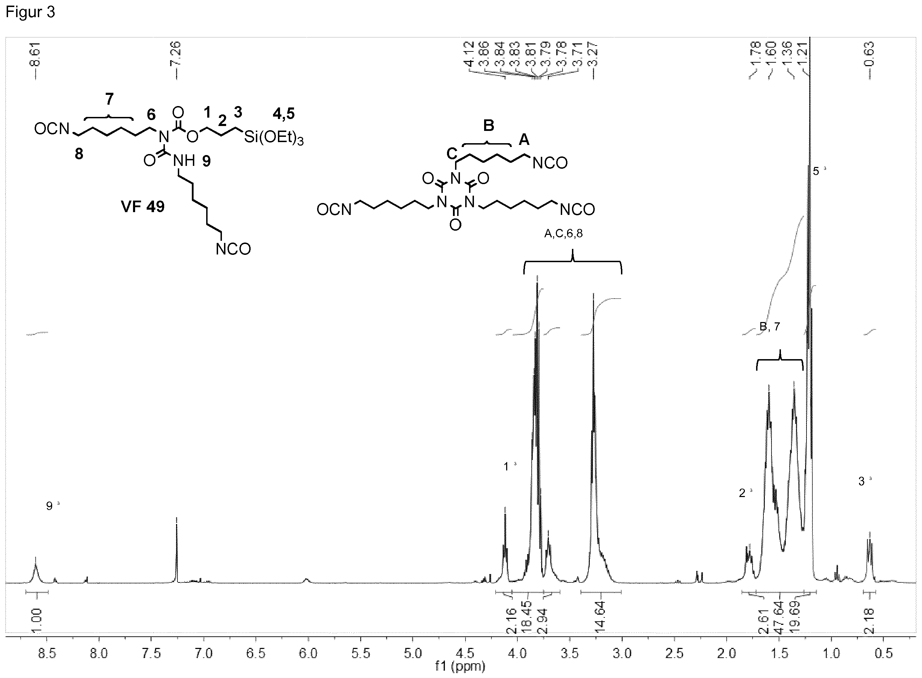

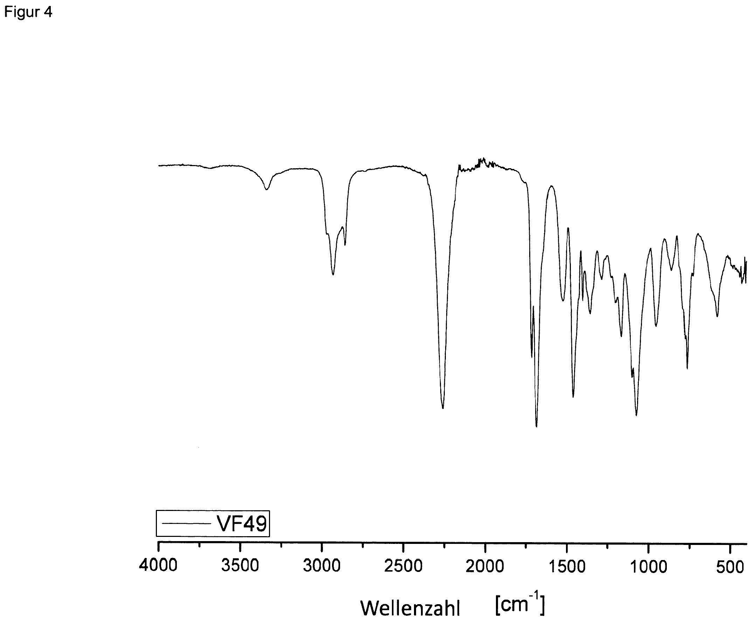

Das Produkt wurde durch IR- (Figur 4) und ¹H-NMR Spektroskopie (Figur 3) charakterisiert.

### Beispiel 2:

10 g des oben hergestellten allophanatgruppenhaltigen Polyisocyanats wurden für 24 Stunden in 50 mL Toluol bei 80 °C mit 1,7 mL Allylalkohol der Fa. Aldrich umgesetzt, so daß nach Abdestillieren der Lösemittel ein im Mittel 2 Allylgruppen aufweisendes Produkt **VF 52** erhalten wurde. 5 g dieses Produktes wurden in 15 ml absolutem THF gelöst. Es wurden 4,1 mL HSi(OEt)₃ der Fa. ABCR zugegeben und die Lösung wurde auf 65 °C erwärmt. Unter starkem Rühren wurden 100 µl einer Lösung von Pt-divinyltetramethyldisiloxan (2,1% Pt) in Xylol der Fa. ABCR Gelest zugegeben. Nach 3 h wurden die Lösemittel bei 40 °C unter vermindertem Druck abdestilliert. Man erhielt das Produkt **VF 56** als hellgelbes Öl.

### Beispiel 3:

10 g des oben hergestellten allophanatgruppenhaltigen Polyisocyanats wurden für 24 Stunden in 50 mL Toluol bei 80 °C mit 3,5 mL Allylalkohol der Fa. Aldrich umgesetzt, so daß nach Abdestillieren der Lösemittel ein im Mittel 3 Allylgruppen aufweisendes Produkt **VF 53** erhalten wurde. 5 g dieses Produktes wurden in 15 ml absolutem THF gelöst. Es wurden 5,4 mL HSi(OEt)₃ der Fa. ABCR zugegeben und die Lösung wurde auf 65 °C erwärmt. Unter starkem Rühren wurden 100 µl einer Lösung von Pt-divinyltetramethyldisiloxan (2,1% Pt) in Xylol der Fa. ABCR Gelest zugegeben. Nach 3 h wurden die Lösemittel bei 40 °C unter vermindertem Druck abdestilliert. Man erhielt das Produkt **VF 57** als zähes hellgelbes Öl.

### Beispiel 4:

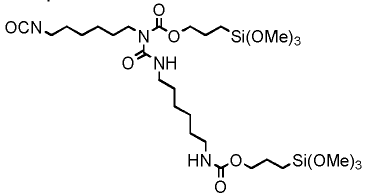

2 g des im Mittel 2 Allylgruppen aufweisenden Produktes **VF 52** aus Beispiel 2 wurden in 10 mL THF gelöst. Es wurden 1,1 mL HSi(OMe)₃ der Fa. Aldrich zugegeben und die Lösung wurde auf 65 °C erwärmt. Unter starkem Rühren wurden 50 µl einer Lösung von Pt-divinyltetramethyldisiloxan (2,1% Pt) in Xylol der Fa. ABCR Gelest zugegeben. Nach 3 h wurden die Lösemittel bei 40 °C unter vermindertem Druck abdestilliert. Man erhielt das Produkt **VF 66** als zähes hellgelbes Öl.

## Patentansprüche

1. Verfahren zur Herstellung von silylgruppentragenden, allophanatgruppenhaltigen Polyisocyanaten, **dadurch gekennzeichnet, daß** man
- in einem ersten Schritt mindestens ein Di- oder Polyisocyanat (A) mit mindestens einem ungesättigten Alkohol (B), der mindestens eine C=C-Doppelbindung und mindestens eine Hydroxygruppe trägt, unter Reaktionsbedingungen umsetzt, unter denen Allophanatgruppen ausgebildet werden, wobei die Umsetzung in Anwesenheit mindestens eines Katalysators erfolgt, ein Katalysator eingesetzt wird, mit dem überwiegend allophanatgruppenhaltige Polyisocyanate ohne Isocyanuratgruppen erhalten werden und im Reaktionsgemisch der Anteil an Polyisocyanaten mit anderen funktionellen Gruppen als Allophanatgruppen weniger als 50 Gew.-% beträgt, und
- anschließend an zumindest einen Teil der so an das entstandene allophanatgruppenhaltige Polyisocyanat über Allophanatgruppen gebundenen C=C-Doppel-bindungen durch eine Hydrosilylierung mindestens eine Silanverbindung (C), die mindestens eine Si-H-Bindung trägt, addiert,

2. Verfahren gemäß Anspruch 1, **dadurch gekennzeichnet, daß** es sich bei dem Di- oder Polyisocyanat (A) um aliphatische oder cycloaliphatische Diisocyanate handelt.

3. Verfahren gemäß Anspruch 1 oder 2, **dadurch gekennzeichnet, daß** das Diisocyanat ausgewählt ist aus der Gruppe bestehend aus 1,6-Hexamethylendiisocyanat, 1,3-Bis(iso-cyanatomethyl)cyclohexan, Isophorondiisocyanat und 4,4'- oder 2,4'-Di(isocyanato-cyclohexyl)methan.

4. Verfahren gemäß einem der vorstehenden Ansprüche, **dadurch gekennzeichnet, daß** Verbindung (C) die Formel (V) aufweist 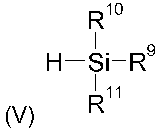 worin R⁹-R¹¹ unabhängig voneinander
- einen Alkylrest oder
- einen Rest -O-R¹² bedeuten,
worin
R¹² ein Alkyl- oder Arylrest bedeuten kann.

5. Verfahren gemäß einem der Ansprüche 1 bis 3, **dadurch gekennzeichnet, daß** es sich bei Verbindung (C) um siloxanverbrückte Verbindungen (C1) der Formel 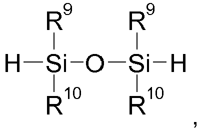 oder deren höheren Homologe mit n = 2 bis 5 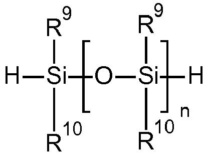 handelt,
worin R⁹-R¹¹ unabhängig voneinander
- einen Alkylrest oder
- einen Rest -O-R¹² bedeuten,
worin
R¹² ein Alkyl- oder Arylrest bedeuten kann.

6. Verfahren gemäß einem der Ansprüche 1 bis 4, **dadurch gekennzeichnet, daß** Verbindung (C) ausgewählt ist aus der Gruppe bestehend aus Triethylsilan, Tri-iso-propylsilan, Dimethylphenylsilan, Diethoxymethylsilan, Dimethoxymethylsilan, Ethoxydimethylsilan, Phenoxydimethylsilan, Triethoxysilan, Trimethoxysilan, Bistrimethylsiloxymethylsilan oder Gemischen davon.

7. Verfahren gemäß einem der vorstehenden Ansprüche, **dadurch gekennzeichnet, daß** Verbindung (B) genau eine C=C-Doppelbindung und genau eine Hydroxygruppe trägt.

8. Verfahren gemäß Anspruch 7, **dadurch gekennzeichnet, daß** es sich bei der C=C-Doppelbindung der Verbindung (B) um eine isolierte Doppelbindung handelt.

9. Verfahren gemäß einem der vorstehenden Ansprüche, **dadurch gekennzeichnet, daß** Verbindung (B) ausgewählt ist aus der Gruppe bestehend aus Allylalkohol (2-Propen-1-ol), Methallylalkohol (2-Methyl-2-propen-1-ol), Homoallylalkohol (3-Buten-1-ol), 1-Buten-3-ol, 3-Methyl-2-buten-1-ol, 2-Methyl-3-buten-2-ol, 1-Octen-3-ol, 2-Hexen-1-ol, 1-Penten-3-ol, Phytol, Farnesol und Linalool.

10. Verfahren gemäß einem der vorstehenden Ansprüche, **dadurch gekennzeichnet, daß** die Stöchiometrie von ungesättigtem Alkohol (B) zu den Isocyanatgruppen im Di- oder Polyisocyanat (A) von 1:0,1 bis 0,1:1 beträgt.

11. Verfahren gemäß einem der vorstehenden Ansprüche, **dadurch gekennzeichnet, daß** die Reaktionstemperatur in der ersten Stufe zwischen 40 und 120 °C und in der zweiten Stufe 40 und 80 °C beträgt.

12. Verfahren gemäß einem der vorstehenden Ansprüche, **dadurch gekennzeichnet, daß** in der ersten Stufe als Katalysator ein quartäres Ammonium salz eingesetzt wird, ausgewählt aus der Gruppe bestehend aus quartären Ammonium carboxylaten, quartären Ammonium carbonaten, quartären Ammonium phenolaten und quartären Ammonium hydroxiden.

13. Silylerte allophanatgruppenhaltige Polyisocyanate, erhältlich gemäß einem der vorstehenden Ansprüche.

14. Beschichtungsmassen folgender Zusammensetzung:
- mindestens ein silyliertes allophanatgruppenhaltiges Polyisocyanat gemäß Anspruch 13,
- gegebenenfalls mindestens einen Katalysator, der die Umsetzung von isocyanatgruppen mit gegenüber Isocyanat reaktiven Gruppen zu katalysieren vermag,
- mindestens ein Bindemittel mit gegenüber Isocyanat reaktiven Gruppen,
- gegebenenfalls mindestens ein lacktypisches Additiv,
- gegebenenfalls mindestens ein Lösungsmittel sowie
- gegebenenfalls mindestens ein Pigment.

15. Verwendung von Beschichtungsmassen gemäß Anspruch 14 zum Beschichten von Substraten.

## Claims

1. A process for preparing polyisocyanates carrying silyl groups and containing allophanate groups, which comprises
- in a first step reacting at least one di- or polyisocyanate (A) with at least one unsaturated alcohol (B) which carries at least one C=C double bond and at least one hydroxyl group under reaction conditions under which allophanate groups are formed, the reaction taking place in the presence of at least one catalyst, a catalyst being used with which predominantly polyisocyanates containing allophanate groups, without isocyanurate groups, are obtained, and in the reaction mixture, the fraction of polyisocyanates with functional groups other than allophanate groups is less than 50 wt%, and
- subsequently adding at least one silane compound (C) which carries at least one Si-H bond, by a hydrosilylation, to at least some of the C=C double bonds bonded thus by means of allophanate groups to the resultant polyisocyanate containing allophanate groups.

2. The process according to claim 1, wherein the di- or polyisocyanate (A) comprises aliphatic or cycloaliphatic diisocyanates.

3. The process according to claim 1 or 2, wherein the diisocyanate is selected from the group consisting of hexamethylene 1,6-diisocyanate, 1,3-bis(isocyanatomethyl)cyclohexane, isophorone diisocyanate, and 4,4'- or 2,4'-di(isocyanatocyclohexyl)methane.

4. The process according to any of the preceding claims, wherein compound (C) has the formula (V) 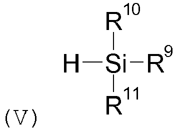 in which R⁹-R¹¹ independently of one another are
- an alkyl radical or
- a radical -O-R¹², in which R¹² may be an alkyl or aryl radical.

5. The process according to any of claims 1 to 3, wherein compound (C) comprises siloxane-bridged compounds (C1) of the formula 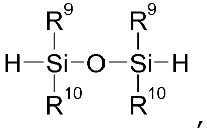 or their higher homologs with n = 2 to 5 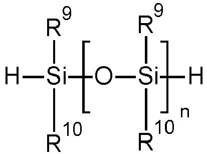 in which R⁹-R¹¹ independently of one another are
- an alkyl radical or
- a radical -O-R¹²,
in which
R¹² may be an alkyl or aryl radical.

6. A process according to any of claims 1 to 4, wherein compound (C) is selected from the group consisting of triethylsilane, triisopropylsilane, dimethylphenylsilane, diethoxymethylsilane, dimethoxymethylsilane, ethoxydimethylsilane, phenoxydimethylsilane, triethoxysilane, trimethoxysilane, bistrimethylsiloxymethylsilane, or mixtures thereof.

7. The process according to any of the preceding claims, wherein compound (B) carries precisely one C=C double bond and precisely one hydroxyl group.

8. The process according to claim 7, wherein the C=C double bond of the compound (B) is an isolated double bond.

9. The process according to any of the preceding claims, wherein compound (B) is selected from the group consisting of allyl alcohol (2-propen-1-ol), methallyl alcohol (2-methyl-2-propen-1-ol), homoallyl alcohol (3-buten-1-ol), 1-buten-3-ol, 3-methyl-2-buten-1-ol, 2-methyl-3-buten-2-ol, 1-octen-3-ol, 2-hexen-1-ol, 1-penten-3-ol, phytol, farnesol, and linalool.

10. The process according to any of the preceding claims, wherein the stoichiometry of unsaturated alcohol (B) to the isocyanate groups in the di- or polyisocyanate (A) is from 1:0.1 to 0.1:1.

11. The process according to any of the preceding claims, wherein the reaction temperature is between 40 and 120°C in the first stage and 40 and 80°C in the second stage.

12. The process according to any of the preceding claims, wherein as catalyst in the first stage a quaternary ammonium salt is used, selected from the group consisting of quaternary ammonium carboxylates, quaternary ammonium carbonates, quaternary ammonium phenoxides, and quaternary ammonium hydroxides.

13. A silylated polyisocyanate containing allophanate groups obtainable according to any of the preceding claims.

14. A coating composition of the following composition:
- at least one silylated polyisocyanate containing allophanate groups according to claim 13,
- optionally at least one catalyst capable of catalyzing the reaction of isocyanate groups with isocyanate-reactive groups,
- at least one binder having isocyanate-reactive groups,
- optionally at least one typical coatings additive,
- optionally at least one solvent, and
- optionally at least one pigment.

15. The use of a coating composition according to claim 14 for coating substrates.

## Revendications

1. Procédé pour la préparation de polyisocyanates portant des groupes silyle, contenant des groupes allophanate, **caractérisé en ce que**
- dans une première étape, on transforme au moins un diisocyanate ou polyisocyanate (A) avec au moins un alcool insaturé (B), qui porte au moins une double liaison C=C et au moins un groupe hydroxy, dans des conditions de réaction dans lesquelles des groupes allophanate sont formés, la transformation ayant lieu en présence d'au moins un catalyseur, un catalyseur étant utilisé qui permet d'obtenir des polyisocyanates contenant principalement des groupes allophanate sans groupes isocyanurate et, dans le mélange réactionnel, la proportion de polyisocyanates présentant d'autres groupes fonctionnels que des groupes allophanate représentant moins de 50% en poids, et
- ensuite, on additionne sur au moins une partie des doubles liaisons C=C ainsi liées via des groupes allophanate au polyisocyanate contenant des groupes allophanate formé, par une hydrosilylation, au moins un composé de type silane (C) qui porte au moins une liaison Si-H.

2. Procédé selon la revendication 1, **caractérisé en ce qu'**il s'agit, pour le diisocyanate ou le polyisocyanate (A) de diisocyanates aliphatiques ou cycloaliphatiques.

3. Procédé selon la revendication 1 ou 2, **caractérisé en ce que** le diisocyanate est choisi dans le groupe constitué par le diisocyanate de 1,6-hexaméthylène, le 1,3-bis(isocyanatométhyl)cyclohexane, le diisocyanate d'isophorone et le 4,4'-di(isocyanatocyclohexyl)méthane ou le 2,4'-di(isocyanatocyclohexyl)méthane.

4. Procédé selon l'une quelconque des revendications précédentes, **caractérisé en ce que** le composé (C) présente la formule (V) 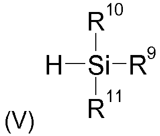 dans laquelle R⁹-R¹¹ signifient, indépendamment les uns des autres
- un radical alkyle ou
- un radical -O-R¹², dans lequel
R¹² peut signifier un radical alkyle ou aryle.

5. Procédé selon l'une quelconque des revendications 1 à 3, **caractérisé en ce qu'**il s'agit, pour le composé (C), de composés présentant un pont siloxane (C1) de formule 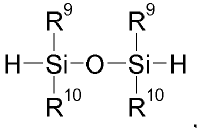 ou de leurs homologues supérieurs où n = 2 à 5 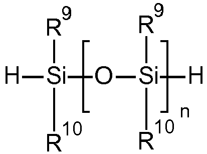 dans laquelle R⁹-R¹¹ signifient, indépendamment les uns des autres
- un radical alkyle ou
- un radical -O-R¹², dans lequel
R¹² peut signifier un radical alkyle ou aryle.

6. Procédé selon l'une quelconque des revendications 1 à 4, **caractérisé en ce que** le composé (C) est choisi dans le groupe constitué par le triéthylsilane, le triisopropylsilane, le diméthylphénylsilane, le diéthoxyméthylsilane, le diméthoxyméthylsilane, l'éthoxydiméthylsilane, le phénoxydiméthylsilane, le triéthoxysilane, le triméthoxysilane, le bis-triméthylsiloxyméthylsilane ou leurs mélanges.

7. Procédé selon l'une quelconque des revendications précédentes, **caractérisé en ce que** le composé (B) porte exactement une double liaison C=C et exactement un groupe hydroxy.

8. Procédé selon la revendication 7, **caractérisé en ce qu'**il s'agit, pour la double liaison C=C du composé (B) d'une double liaison isolée.

9. Procédé selon l'une quelconque des revendications précédentes, **caractérisé en ce que** le composé (B) est choisi dans le groupe constitué par l'alcool allylique (2-propén-1-ol), l'alcool méthallylique (2-méthyl-2-propén-1-ol), l'alcool homoallylique (3-butén-1-ol), le 1-butén-3-ol, le 3-méthyl-2-butén-1-ol, le 2-méthyl-3-butén-2-ol, le 1-octén-3-ol, le 2-hexén-1-ol, le 1-pentén-3-ol, le phytol, le farnésol et le linalol.

10. Procédé selon l'une quelconque des revendications précédentes, **caractérisé en ce que** la stoechiométrie d'alcool insaturé (B) aux groupes isocyanate dans le diisocyanate ou le polyisocyanate (A) est de 1 : 0,1 à 0,1 : 1.

11. Procédé selon l'une quelconque des revendications précédentes, **caractérisé en ce que** la température de réaction, dans le premier étage, est située entre 40 et 120°C et, dans le deuxième étage, entre 40 et 80°C.

12. Procédé selon l'une quelconque des revendications précédentes, **caractérisé en ce que**, dans le premier étage, on utilise, comme catalyseur, un sel d'ammonium quaternaire choisi dans le groupe constitué par les carboxylates d'ammonium quaternaire, les carbonates d'ammonium quaternaire, les phénolates d'ammonium quaternaire et les hydroxydes d'ammonium quaternaire.

13. Polyisocyanates silylés contenant des groupes allophanate, pouvant être obtenus selon l'une quelconque des revendications précédentes.

14. Masses de revêtement présentant la composition suivante :
- au moins un polyisocyanate silylé contenant des groupes allophanate selon la revendication 13,
- le cas échéant au moins un catalyseur, qui peut catalyser la transformation de groupes isocyanate avec des groupes réactifs par rapport à isocyanate,
- au moins un liant présentant des groupes réactifs par rapport à isocyanate,
- le cas échéant au moins un additif caractéristique des laques,
- le cas échéant au moins un solvant ainsi que
- le cas échéant au moins un pigment.

15. Utilisation des masses de revêtement selon la revendication 14 pour le revêtement de substrats.
